# NEW EUROPEAN PATENT SPECIFICATION

(11) **EP 1 622 304 B2**
(45) Date of publication and mention of the opposition decision: **27.02.2013**
(45) Mention of the grant of the patent: 10.10.2007
(21) Application number: 05754868.7
(22) Date of filing: 08.05.2005
(51) Int. Cl.: H04L 12/14

(54) **METHOD FOR SELECTING A CHARGING RULE IN CONNECTION WITH SUBSCRIBER**
VERFAHREN ZUR WAHL EINER GEBÜHRENERFASSUNGSREGEL IN VERBINDUNG MIT EINEM TEILNEHMER
PROCEDE POUR LA SELECTION D'UNE REGLE DE FACTURATION POUR UN ABONNE

(30) Priority: 12.05.2004 CN 200410044425
(43) Date of publication of application: 01.02.2006
(73) Proprietor: Huawei Technologies Co., Ltd., Shenzhen, Guangdong Province 518129 (CN)
(72) Inventor: ZHANG, Wenlin, Huawei Administration Building, Shenzhen, Guangdong 518129 (CN); DUAN, Xiaoqin, Huawei Administration Building, Shenzhen, Guangdong 518129 (CN); WU, Yajuan, Huawei Administration Building, Shenzhen, Guangdong 518129 (CN)
(74) Representative: Körber, Martin Hans
(86) International application number: PCT/CN2005/000634
(87) International publication number: WO 2005/109748

(56) References cited:
- EP-A1- 1 296 481
- WO-A-2004/036825
- WO-A-2004/036890
- WO-A1-03/013123
- WO-A1-2004/036890
- WO-A2-01/39483
- WO-A2-01/99400
- WO-A2-02/084947
- WO-A2-03/047164
- US-A1- 20020 177 431
- US-A1- 20030 039 237
- US-A1- 20040 030 620
- US-A2- 20040 009 761
- "3rd Generation Partnership Project; Technical Specification Group Services and Systems Aspects; Overall High Level Functionality and Architecture Impacts of Flow Based Charging, Stage 2 (Release 6) 3GPP TS 23.125 V6.0.0" [Online] March 2004 (2004-03), 3GPP , SOPHIA ANTIPOLIS , XP002391829 Retrieved from the Internet: URL:http://www.3gpp.org/ftp/Specs/html-inf o/23125.htm> [retrieved on 2006-07-25] Chapters 6 and 7
- "3rd Generation Partnership Project; Technical Specification Group Services and System Aspects; Overall Architecture Aspects of IP Flow Based Bearer Level Charging; Stage 2 (Release 6); 3GPP TR 23.825" ETSI STANDARDS, EUROPEAN TELECOMMUNICATIONS STANDARDS INSTITUTE, SOPHIA-ANTIPO, FR, vol. 3-SA2, no. V110, 2003, XP014031384 ISSN: 0000-0001
- DATABASE 3GPP TS 23.228 V6.2.0 01 June 2003 '3rd Generation Partnership Project'
- DATABASE 3GPP TR 23.825 V1.3.0 01 December 2003 '3rd Generation Partnership Project'
- DATABASE 12 June 2008 A. PASHALIDIS; C. MITCHELL: 'Using GSM/UMTS for Single sign-On', XP010670965
- DATABASE NATIONAL AND KAPODISTRIAN UNIVERSITY OF ATHENS M. KOUTSOPOLOU: 'A Novel Billing Scheme for UMTS Networks'
- DATABASE 3GPP TS 23.002 V6.1.0 01 June 2003 GSM: '3rd Generation Partnership Project'

## Description

### Field of the Technology

The present invention relates to the field of charging for packet data, and particularly to a method for selecting a charging rule in connection with subscriber.

### Background of the Invention

Along with increasing applications of packet data service, it has become a common concern of operators to charge for packet data service accurately and reasonably.

In the present charging system of all packet-switch based network, for example, the General Packet Radio Service (GPRS) network, since service data flow based on a terminal can only be differentiated down to the level identified by an Access Point Name (APN) and charging information is colleted per Packet Data Protocol (PDP) Context, it is only possible to charge according to the APN and the PDP Context. In practical applications, however, a plurality of parallel service data flows may likely be borne in one PDP Context, for which it may be necessary to charge in different charging modes. This is a requirement the present GPRS charging system can not satisfy. For example, a packet streaming service and a multi-media messaging service may be carried through a terminal at the same time and the two services are born in one PDP Context to the same APN at the same time. The charging rules for the two services, however, may be different as the packet streaming service needs to be charged based on the data volume received on the terminal or the time duration of the service while the multi-media messaging service needs to be charged based on an event, which may be sending or receiving a multi-media message. In order to charge for packet-switch based data services of different types by the same approach, it is necessary to put forward a new charging architecture for all the packet-switch based charging system and to adopt a universal charging mechanism based on service data flow.

In view of the above, the 3^{rd} Generation Partnership Project (3GPP) is discussing the implementation of Flow Based Charging (FBC) based on Internet Protocol (IP). In terms of a packet data service, the data volume or time consumed by the terminal when using the service is referred to as Service Data Flow, which aggregates set of packet flows. A plurality of different packet data service flows can be borne in one PDP Context to one APN. Thus, the charging granularity based on service data flow is far detailed than the charging granularity based on a PDP Context. As charging based on service data flow gives a more actual reflection of the resources occupied by a certain service data flow, it provides the operator or service provider with more flexible approaches to charge for the services. For example, 3GPP TS 23. 125 gives an overall high level functionality and architecture impacts of flow based charging, in which relevant architeture concepts and message flows about the AF, CRF and TPR are given. This document discloses the features in the preamble of claim 1.

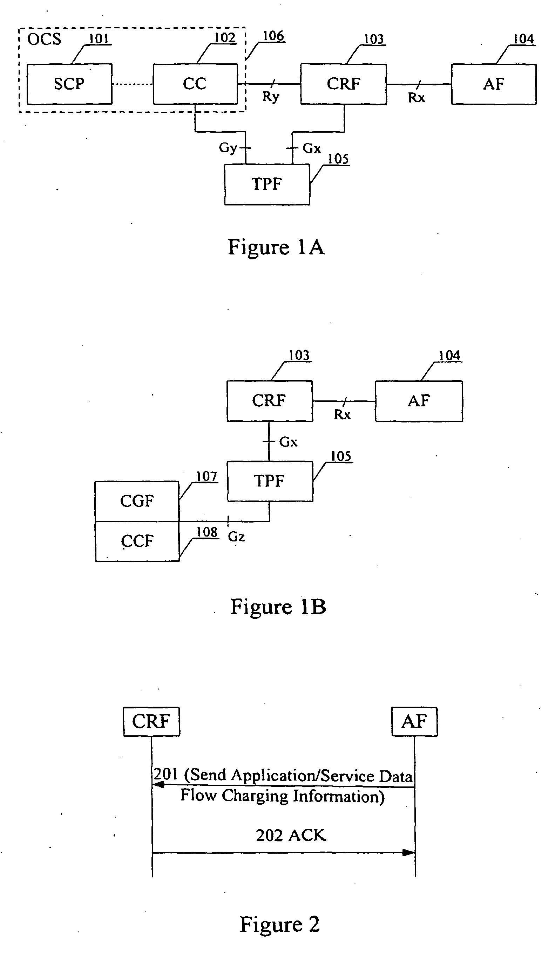

The system architecture, functional specifications, and message interactive processes of FBC have been described in 3GPP. Fig.1A shows FBC system architecture for on-line charging, where Service Control Point (SCP) 101 of Customized Application for Mobile Network Enhanced Logic (CAMEL) and Service Data Flow Based Credit Control Function (CC) 102 constitute Online Charging System (OCS) 106. CC 102 is connected with Service Data Flow Based Charging Rule Function (CRF) 103 via interface Ry, CRF 103 is connected with Application Function (AF) 104 via interface Rx, CRF 103 is connected with Traffic Plane Function (TPF) 105 via interface Gx, and CC 102 is connected with TPF 105 via interface Gy.

The FBC system architecture supporting off-line charging is shown as Fig.1B, where CRF 103 is connected with AF 104 via Rx, CRF 103 is connected with TPF 105 via Gx, and TPF 105 is connected via interface Gz with Charging Gateway Function (CGF) 107 and Charging Collection Function (CCF) 108, respectively.

The functions implemented by each functional entity are described below in accordance with the current definitions of FBC functional entities in 3GPP.

TPF 105 is the functional entity for bearing service data flow, being able to differentiate data packets belonging to different processes of packet data service and used for collecting off-line charging information and performing on-line credit control. When the bearer of a service data flow changes, for example, in the processes of bearer creating, bearer modifying, and bearer deleting, TPF 105 will request a charging rule from CRF 103 via Gx and the message requesting a charging rule may carry relevant information of the terminal, features of the bearer as well as information related with the network, where relevant information of the terminal may comprise the international number of Mobile Station Integrated Service Data Network (MSISDN), the International Mobile Subscriber Identity (IMSI), and etc, relevant information on features of bearer may comprise parameters of Quality of Service (QoS), and information related with the network may comprise Mobile Network Code (MNC), Mobile Country Code (MCC), and etc. TPF 105 performs packet data filtering and charging-information collecting on the corresponding service data flow in accordance with the charging rule returned by CRF 103. One TPF 105 can be served by one or multiple CRF 103, and when one TPF 105 is served by multiple CRFs 103, an appropriate CRF 103 can be selected according to the terminal identification for interaction with TPF 105. TPF 105 supports predefined charging rules and predefined service data flow filters.

CRF 103 is the functional entity for storing charging rules, supporting dynamic and static charging rules. A dynamic charging rule refers to a rule generated in real-time in accordance with the charging policy of a packet data service and applied to the corresponding service data flow; a static charging rule refers to a rule that does not change in the process while the terminal is using a packet data service and can be activated dynamically by some events during the process when the terminal is using a packet data service. CRF 103 can select appropriate charging rules in accordance with the information provided by TPF 105, and/or AF 104, and/or OCS 106, and provide the selected charging rule for TPF 105 when TPF 105 requests a charging rule from it or a specific event has occurred. One CRF 103 may correspond to multiple TPF 105.

AF 104 represents all functional entities associated with application. AF 104 may be a network entity of the operator itself, or a network entity of a third-party service provider. AF 104 provides CRF 103 with appropriate information related with service and application, based on which CRF 103 can select or configure appropriate charging rules. One AF 104 may correspond to more than one CRF 103, and when more than one CRF 103 corresponds to one AF 104, an appropriate CRF 103 can be selected according to the terminal identification for interaction with AF 104.

CC 102 is the functional entity for performing credit control, which is used only in online charging system and can be implemented by adding a new function to the existing OCS 106. CC 102 in OCS 106 can provide CRF 103 via interface Ry with relevant online charging information for use in selecting a charging rule.

CGF 107/CCF 108 is the functional entity for off-line charging system and can be implemented with approaches in the present packet-switched data charging system.

If the bearer network is a GPRS network, TPF 105 will be a Gateway GPRS Support Node (GGSN), AF 104 will be an application proxy or an application server in a Packet Data Network (PDN). When an IP Multimedia Subsystem (IMS) is borne on a GPRS network, AF 104 will be a Proxy Call Session Control Function (P-CSCF) entity, CRF 103 will be a newly-added logic entity.

The above mentioned charging architecture and functions implemented by each functional entity are also applicable to the network architecture of 3GPP2.

In the existing charging systems based on the FBC mechanism, AF 104 and CRF 103 are connected via Rx interface. That is why CRF 103 can select appropriate charging rules or configure some parameters for charging rules based on some application-relevant information provided by AF 104. The operator can determine which data from AF 104 can be used in selecting a charging rule when configuring a charging rule in CRF 103. At present, the information which AF 104 provides for CRF 103 includes: identity information of a service data flow, which can identify the aggregate set of IP flows through using wildcard; information for use in selecting a charging rule, including application/service identification, events for triggering an application/service charging rule, type of a service data flow, and rate of a service data flow. The identity information of a service data flow can support wildcard, and type of a service data flow can be audio, video, and etc., which is an optional parameter, and so is the rate of a service data flow.

In the implementation of the existing FBC mechanism, the service-based information AF 104 provides for CRF 103 can not satisfy the diversified demand for service-data-flow-based charging. For example, AF 104 may need to charge a subscriber or some subscribers currently using a packet data service on favorable terms depending on the situation of using that packet data service. In this case, with only the above information provided by AF 104, CRF 103 can not differentiate subscribers; neither can it select different charging rules in connection with the subscribers. As a result, it is impossible to realize the favorable terms which AF 104 desires to apply to appropriate subscribers, leading to a sharp decrease of the frequency of subscribers' use of packet data services and negative impact on the promotion of packet data services.

In addition, when an operator promotes its packet data services in a group of subscribers, it may provide favorable terms for the entire group or a certain subscriber of the group on the condition of the frequency of using a certain packet data service. Since CRF 103 is unable to determine the group or the subscribers in the group for whom the favorable terms are applicable according to the above information provided by AF 104, it is impossible to apply the favorable charging terms to the group or subscribers in the group.

Apart from the above, the existing charging methods based on the FBC mechanism have not taken into account the implementation of charging a roaming subscriber based on the FBC mechanism in the accessed Public Land Mobile Network (PLMN). As CRF 103 is a functional entity of storing charging rules in the FBC mechanism, how a charging rule is set down and selected has to be agreed beforehand between the operator and the service provider. Moreover, depending on the type of a subscriber, for example, a prepaid subscriber or a post-paid subscriber, CRF 103 may select different charging rules for different subscribers even when they are using the same packet data service. Therefore, CRF 103 is a functional entity with home attribute and the information related with the subscriber and the charging model has to be obtained by inter-working with the home CRF. In case that the AF 104 which a subscriber is accessing and the home CRF of the subscriber are located in different PLMNs, it will be necessary for the AF 104 to forward messages to the home CRF of the subscriber via other CRFs. As AF 104 provides only the information based on the service instead of the information related with the subscriber, it is impossible for other CRFs to address the home CRF of the subscriber according to the information, and accordingly, to forward the information for use in selecting a charging rule. As a result, it is impossible for the home CRF of the subscriber to select a charging rule for the subscriber.

### Summary of the Invention

In view of the above, this invention provides a method for selecting a charging rule in connection with a subscriber, making the charging of a subscriber more diversified and attracting more use of packet data services.

The invention is implemented based on the following technical scheme, and the method thereof mainly includes the following steps:

Application Function (AF) provides Charging Rule Function (CRF) with the user information identifying the subscriber and used for selecting a charging rule; wherein said user information comprises subscriber terminal identification,

B. CRF selects a charging rule for said subscriber based on the user information and service information.

AF is located in the Public Land Mobile Network (PLMN) currently accessed by the subscriber, and is configured with an agent CRF. Thus said step A comprises:
A1. AF in the PLMN currently accessed by the subscriber provides the agent CRF configured for the AF with the service information and user information for use in selecting a charging rule;
A2. The agent CRF forwards the service information and user information for use in selecting a charging rule to the home CRF of the subscriber.

Said step B comprises the home CRF of the subscriber selecting a charging rule for the subscriber based on the user information and the service information.

Before providing the agent CRF configured for the AF with the information about a service and a subscriber in step Al, the method further comprises: deciding whether the home PLMN of the subscriber is the PLMN currently accessed by the subscriber, if not, providing the agent CRF with the information for use in selecting a charging rule.

Said step of deciding whether the home PLMN of the subscriber is the PLMN currently accessed by the subscriber comprises deciding whether the home PLMN of the subscriber is the PLMN currently accessed by the subscriber based on the user information.

After said step B, the method further comprises step C1: CRF provides TPF with a charging rule.

TPF is located in the PLMN currently accessed by the subscriber and is configured with an agent CRF. Thus the method further comprises before step C1: the home CRF of the subscriber sends the selected charging rule to the agent CRF configured for the TPF; and said step C1 comprises the agent CRF providing the charging rule for the TPF.

After said step C1, the method further comprises: TPF performs the charging rule on the service data flow of the subscriber.

Said user information comprises user identification, group identification or a combination of user identification and group identification.

Said combination of user identification and group identification comprises the combination of one or more user identifications and one group identification or the combination of more than one user identification and more than one group identification.

After said step B, the method further comprises step C2: CRF returns a response to AF.

In the method of this invention, AF provides CRF with the user information as well as the service information such that CRF can select a charging rule in connection with the subscriber according to the user information, that is, differentiated charging can be implemented in accordance with different ways of using a same packet data service, thus attracting subscribers of packet data services, increasing the frequency of use thereof, and promoting the spread of packet data services.

When a subscriber is roaming, if the AF currently accessed by the subscriber is located in a different PLMN from where the home CRF of the subscriber is, it will be necessary in the selection of a charging rule that the AF forward the information to the home CRF of the subscriber via another CRF. In this case, as the AF has provided the other CRF with the user information as well as the service information, the other CRF will be able to address the home CRF of the subscriber according to the user information, and further, forward to the home CRF of the subscriber the service information for use in selecting a charging rule so that the home CRF can select a charging rule in connection with a roaming subscriber. In addition, the implementation of this invention will have no impact on existing charging modes in a PLMN due to good compatibility.

### Brief Description of the Drawings

Figure 1A is a schematic diagram for the structure of the on-line FBC system.
Figure 1B is a schematic diagram for the structure of the off-line FBC system.
Figure 2 is a schematic diagram of the process during which AF provides service information and user information for CRF.
Figure 3 is a schematic diagram of the implementation process of this invention.
Figure 4 is a schematic diagram of the implementation process of this invention when the subscriber is roaming.

### Embodiments of the Invention

The invention is hereinafter further described in detail with reference to the accompanying drawings in order to give a clearer picture of the object, technical solution and advantages of this invention.

In this invention, AF provides CRF with the user information as well as service information such that CRF will be able to choose a charging rule in connection with the subscriber according to the user information. The user information comprises a user identification, which may be in the format of subscriber terminal identification, for identifying different independent subscribers; or group identification for identifying different user groups consisting of one or more subscribers. Group identification may be a logical one and a user group may be defined on the basis of applications of packet data service or by a rule provided by the operator. The corresponding relationship between user identification and group identification may be stored in CRF or in other functional entities of PLMN. The user information may also comprise a combination of user identification and group identification for identifying different subscribers in a certain group, or different subscribers in different groups.

Figure 2 is a schematic diagram illustrating the process in which AF provides service information and user information for CRF. As shown in Figure 2, the specific process in which AF provides service information and user information for CRF comprises the steps of:
Step 201: AF sends to CRF Application/Service Data Flow Charging Information, which contains service information and user information. The service information may comprise application/service identification, trigger event of application/service charging rule, type of service data flow, and rate of service data flow.
Step 202: After receiving the application/service information, CRF returns an ACK message to AF to notify AF of having received the application/service information sent by AF.

In the subsequent operation, if the CRF which receives the application/service information is the home CRF of the subscriber, this CRF will choose an appropriate charging rule for the subscriber according to the user information and service information and send to TPF the charging rule finally selected. After receiving the charging rule, TPF performs charging for the corresponding service data flow according to the selected charging rule. If the CRF which receives the application/service information is not the home CRF of the subscriber, this CRF will find the home CRF of the subscriber according to the user information and send to the home CRF of the subscriber the service information and user information provided by AF. After receiving the information, the home CRF will select for the corresponding subscriber an appropriate charging rule according to the user information and service information and then send the selected charging rule to TPF. After receiving the charging rule, TPF will perform charging for the corresponding service data flow according to the selected charging rule.

The user information may comprise one or more user identifications for identifying one or more independent subscribers, or one or more group identifications for identifying one or more groups, or a combination of one or more user identifications and one group identification for identifying one or more independent subscribers in a group, or a combination of a plurality of user identifications and one group identification for identifying different subscribers in a certain group, or a combination of a plurality of user identifications and a plurality of group identifications for identifying different independent subscribers in different groups. In addition, the user information may be null for use in requesting CRF to select the same charging rule for all subscribers. The number of user identifications, group identifications or combinations of user identification and group identification can be set based on specific applications or the desire of the operator.

In this way, if AF wishes to implement a specific charging rule for a subscriber or group, it can provide the user information comprising user identification, or group identification, or combination of user identification and group identification for CRF, which will select a charging rule in connection with the subscriber or group, thus diversified charging can be implemented.

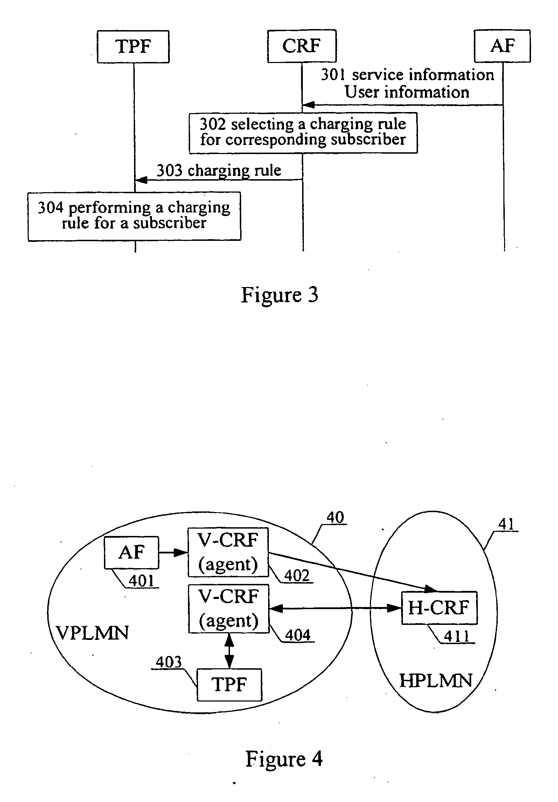

Figure 3 is a schematic diagram of the implementing process of this invention. As shown in Figure 3, when AF is located in the same PLMN as the home CRF of the subscriber, the CRF mentioned below is the home CRF of the subscriber. The implementation of selecting a charging rule in connection with the subscriber comprises the steps of:
Steps 301 - 302: AF provides CRF with the service information and user information. CRF selects an appropriate charging rule for the corresponding subscriber according to the user information and service information received.
Steps 303 - 304: CRF sends the selected charging rule to TPF. After receiving the charging rule, TPF performs the charging rule for the corresponding service data flow in connection with the corresponding subscriber.

The invention is further described below by examples of application with reference to Figure 3.

The first example: AF is the application server of an Internet Service Provider (ISP) providing on-line game service, and the subscribers are charged in different rates according to different levels of each subscriber in the on-line game. For instance, a subscriber with 10,000 credits would be given a 50% discount of the charging rate and a subscriber with 5,000 credits would enjoy 20% discount. A preferential charging policy will be applied to any subscriber who has acquired the amount of credits set in advance as long as she/he continues to use the on-line game service provided by the application server. Thus, it is necessary to modify the charging rule performed on that subscriber when her/his credits have reached 10,000. The specific implementation comprises the steps of:
Steps 301A - 302A: There is information about the subscriber's credit stored in AF, so when the subscriber's credits accumulated have reached 10,000, AF will send Application/Service Data Flow Charging Information to CRF to inform CRF that the specific subscriber should be charged with a new charging rule. Said Application/Service Data Flow Charging Information includes the service information and the subscriber identification. The service information may comprise: service data flow identification for identifying the service data flow on which a new charging rule needs to be performed, AF application identification for identifying the modification to the charging rule for the on-line game service, and the trigger event of application/service charging rules for indicating that the charging rate is to be modified to 50% of the rate. The subscriber identification is for indicating that the new rule is to be applied only to the identified subscriber. After receiving the Application/Service Data Flow Charging Information, CRF will select an appropriate charging rule for the subscriber according to the user identification and service information as well as the information from TPF. The charging rate in this selected charging rule will be 50% of the original rate.
Steps 303A - 304A: CRF sends to TPF the selected charging rule. After receiving the rule, TPF makes appropriate operations on the received charging rule, for instance, creating a new charging rule, deleting the original charging rule, or modifying the original charging rule. Then TPF will perform the charging rule on the corresponding service data flow in connection with the subscriber.

It can be seen from the above that charging subscribers of high credits with preferential charging rates can attract not only subscribers of high credits to continue to use the packet data service but also other subscribers to have more access to this service so as to be given a preferential charging rate, thus promoting the packet data service, in this case, the on-line game service.

The second example: The operator is promoting the application of packet data service in subscribers of a group. In the promotion period, all subscribers of the group can be given a 20% discount of the charging rate when using the on-line network service provided by the operator. Thus, it is necessary to modify the charging rule performed on the subscribers of the group at the beginning of the promotion period. The specific implementation comprises the steps of:
Steps 301B - 302B: The AF in charge of on-line services in the operator's network provides the service information and group identification for CRF. The service information includes the service data flow identification with wildcard for identifying all service data flows on which new charging rules are to be performed, AF application identification for indicating that the modification is made to the charging rules for on-line services, the trigger event of application/service charging rules for indicating that the charging rate is to be modified to 80% thereof, and the group identification for indicating the new charging rule is to be performed only on the group subscriber. After receiving the service information and group identification, CRF will select an appropriate charging rule for the group subscriber according to the group identification and service information as well as the information from TPF. The charging rate in this charging rule is 80% of the original rate.
Steps 303B - 304B: CRF sends the selected charging rule to TPF. After receiving the charging rule, TPF makes appropriate operations on the received rule, for instance, creating a new charging rule, deleting the original charging rule, or modifying the original charging rule. Then TPF performs the charging rule on the corresponding service data flow in connection with the subscribers of the corresponding group.

The group identification mentioned above can identify one or more groups, for instance, with one specific group identification identifying one group and a wildcard identification identifying a plurality of groups; and can identify all the groups, for instance, when the group identification is set as 0 (zero), it identifies all groups.

In addition, it is possible to perform a preferential charging rule on one or more subscribers in the group. Then AF needs to provide CRF with the user identification along with the group identification to indicate that one or more the subscribers of the group should be charged with a preferential charging policy, or those different subscribers in different groups should be charged with a preferential charging policy.

At the end of the promotion period, the charging rate can be modified to the original rate by the above procedures to stop charging the group subscriber with a preferential charging policy.

Figure 4 is a schematic diagram of the implementing process of this invention when the subscriber is roaming. As shown in Figure 4, AF 401 currently used by a subscriber is located in a different PLMN from the PLMN where the home CRF (H-CRF) 411 of the subscriber is located. The subscriber is using TPF 403 and AF 401 in PLMN (VPLMN) 40 which is currently accessed by the subscriber. V-CRF 402 is configured for AF 401 as an agent CRF to provide service for subscribers whose home PLMN is other than the currently accessed one. The specific implementation of selecting a charging rule in connection with a roaming subscriber comprises the steps of:

Step A1: AF 401 receives the packet data service request sent from a subscriber and decides that the home PLMN of the subscriber is not PLMN 40 according to the user information, for instance, the user identification. Then AF 401 sends to V-CRF 402 which is configured in advance for AF 401 as an agent CRF the Application/Service Data Flow Charging Information used for selecting a charging rule, which includes the service information and user information. If AF 401 determines according to the user identification that the home PLMN of the subscriber is PLMN 40, AF 401 will send directly to the home CRF of the subscriber the Application/Service Data Flow Charging Information used for selecting a charging rule.

Step A2: After receiving the Application/Service Data Flow Charging Information, V-CRF 402 determines according to the user information that the home PLMN of the subscriber is PLMN 41 and then forwards the Application/Service Data Flow Charging Information used for selecting a charging rule to H-CRF 411 in PLMN 41. After receiving the Application/Service Data Flow Charging Information provided by AF 401, H-CRF 411 selects an appropriate charging rule for the corresponding subscriber based on the user information and service information contained in the Application/Service Data Flow Charging Information.

If the TPF currently used by the subscriber is in the same PLMN as H-CRF 411 of the subscriber, that is, both TPF and H-CRF 411 are located in HPLMN 41, H-CRF 411 will send directly to TPF the selected charging rule. After receiving the charging rule, TPF performs the charging rule on the corresponding service data flow in connection with the subscriber. If TPF 403 currently used by the subscriber is located in a different PLMN from H-CRF 411 of the subscriber, as shown in Figure 4, Visited CRF (V-CRF) 404 is configured for TPF 403 as an agent CRF providing service for subscribers whose home PLMN is other than this, and the subsequent procedure comprises the step of:
Step A3: After selecting a charging rule for the corresponding subscriber, H-CRF 411 sends to V-CRF 404 the selected charging rule. After receiving the selected charging rule provided by H-CRF 411, V-CRF 404 may make proper modification to the charging rule provided by H-CRF 411 according to the charging policy of VPLMN 40 to create a new charging rule, and then sends the created charging rule to TPF 403. After receiving the created charging rule, TPF 403 performs the created charging rule on the corresponding service data flow in connection with the subscriber.

CRF selecting a charging rule as mentioned above may comprise CRF selecting a certain charging rule among the existing charging rules, which are charging rules configured in advance by the operator and having been stored in CRF, or CRF modifying the configuration parameters of the existing charging rules to create new charging rules, or CRF creating new charging rules by configuring whole new parameters.

It is appreciated that the above description is only preferred embodiments of this invention and not to be construed as limits to the protection scope of the invention.

## Claims

1. A method for selecting a charging rule in connection with a subscriber, comprising: an Application Function, AF (104, 401), providing a Charging Rule Function, CRF (103), with service information used for selecting a charging rule,
**characterized in that** the method further comprises:
A. the AF (104, 401) providing the CRF (103) with user information identifying the subscriber and used for selecting a charging rule, wherein said user information comprises subscriber terminal identification,
B. the CRF (103) selecting a charging rule for the subscriber according to the user information and the service information.

2. A method according to Claim 1, wherein the AF (104, 401) is located in the Public Land Mobile Network, PLMN (40), currently accessed by the subscriber while an agent CRF (402) is configured for the AF (104, 401) in the PLMN (40);
Said Step A comprises the steps of:
A1. The AF (104, 401) in the PLMN (40) currently accessed by the subscriber providing the agent CRF (402) configured for the AF (104, 401) with the service information and user information used for selecting a charging rule;
A2. The agent CRF (402) forwarding to the home CRF (411) of the subscriber the service information and user information used for selecting a charging rule;
Said Step B is: the home CRF (411) of the subscriber selecting a charging rule for the subscriber according to the user information and service information.

3. A method according to Claim 2, further comprising before said Step A1 of providing the agent CRF (402) configured for the AF (104, 401) with the service information and user information used for selecting a charging rule:
deciding whether the home PLMN (41) is the PLMN (40) currently accessed by the subscriber, if not, providing the agent CRF (402) configured for the AF (104, 401) with the information used for selecting a charging rule.

4. A method according to Claim 3, wherein said step of deciding whether the home PLMN (41) is the PLMN (40) currently accessed by the subscriber is: deciding whether the home PLMN (41) is the PLMN (40) currently accessed by the subscriber according to the user information.

5. A method according to Claim **1 or** Claim 2, further comprising after said Step B:
C1. the CRF (103, 404) providing Traffic Plane Function, TPF (105, 403), with the charging rule.

6. A method according to Claim 5, wherein the TPF (105, 403) is located in the PLMN (40) currently accessed by the subscriber while an agent CRF (404) is configured for the TPF (403) in the PLMN (40);
the method further comprises before said Step C1: the home CRF (411) of the subscriber sending the selected charging rule to the agent CRF (404) configured for the TPF (403);
Said Step C1 is: the agent CRF (404) providing the TPF (403) with the charging rule.

7. A method according to Claim 5, further comprising after said Step C1:
the TPF (105, 403) performing the charging rule on the service data flow of the subscriber.

8. A method according to Claim I or Claim 2, further comprising after said Step B: the CRF (103) returning an acknowledgement to AF (104).

## Patentansprüche

1. Verfahren zum Auswählen einer Rechnungsstellungsregelung in Verbindung mit einem Teilnehmer, umfassend:
eine Anwendungsfunktion, AF (104, 401), die einer Rechnungsstellungsregelungsfunktion, CRF (103) eine Dienstinformation bereitstellt,
die zum Auswählen einer Rechnungsstellungsregelung verwendet wird,
**dadurch gekennzeichnet, dass** das Verfahren ferner umfasst, dass
A. die AF (104, 401) der CRF (103) eine Benutzerinformation bereitstellt, die den Teilnehmer identifiziert und zum Auswählen einer Rechnungsstellungsregelung verwendet wird, wobei die Benutzerinformation eine Teilnehmer-Anschluss-Identifizierung umfasst,
B. die CRF (103) eine Rechnungsstellungsregelung für den Teilnehmer gemäß der Benutzerinformation und der Dienstinformation auswählt.

2. Verfahren nach Anspruch 1, wobei die AF (104, 401) in dem Public Land-Mobilfunknetz, PLMN (40), angeordnet ist, auf das momentan durch den Teilnehmer zugegriffen wird, während eine Vermittler-CRF (402) für die AF (104, 401) in dem PLMN (40) ausgestaltet ist; wobei der Schritt A die Schritte umfasst, dass
A1. die AF (104, 401) in dem PLMN (40), auf das momentan durch den Teilnehmer zugegriffen wird, der Vermittler-CRF (402), die für die AF (104, 401) ausgestaltet ist, die Dienstinformation und die Benutzerinformation bereitstellt, die zum Auswählen einer Rechnungsstellungsregelung verwendet werden;
A2. die Vermittler-CRF (402) die Dienstinformation und die Benutzerinformation, die zum Auswählen einer Rechnungsstellungsregelung verwendet werden, an die Heim-CRF (411) des Teilnehmers übermittelt;
wobei der Schritt B umfasst, dass die Heim-CRF (411) des Teilnehmers eine Rechnungsstellungsregelung für den Teilnehmer gemäß der Benutzerinformation und der Dienstinformation auswählt.

3. Verfahren nach Anspruch 2, das ferner umfasst, dass vor dem Schritt A1 des Bereitstellens der Dienstinformation und der Benutzerinformation, die zum Auswählen einer Rechnungsstellungsregelung verwendet werden, an die Vermittler-CRF (402), die für die AF (104, 401) ausgestaltet ist, bestimmt wird, ob das Heim-PLMN (41) das PLMN (40) ist, auf das momentan durch den Teilnehmer zugegriffen wird, und wenn dies nicht der Fall ist, der Vermittler-CRF (402), die für die AF (104, 401) ausgestaltet ist, die Information bereitgestellt wird, die zum Auswählen einer Rechnungsstellungsregelung verwendet wird.

4. Verfahren nach Anspruch 3, wobei der Schritt des Bestimmens, ob das Heim-PLMN (41) das PLMN (40) ist, auf das momentan durch den Teilnehmer zugegriffen wird, umfasst, dass gemäß der Benutzerinformation bestimmt wird, ob das Heim-PLMN (41) das PLMN (40) ist, auf das momentan durch den Teilnehmer zugegriffen wird.

5. Verfahren nach Anspruch 1 oder 2, das ferner nach dem Schritt B umfasst, dass C1. die CRF (103, 404) der Verkehrsebenenfunktion TPF (105, 403) die Rechnungsstellungsregelung bereitstellt.

6. Verfahren nach Anspruch 5, wobei die TPF (105, 403) in dem PLMN (40) angeordnet ist, auf das momentan durch den Teilnehmer zugegriffen wird, während eine Vermittler-CRF (404) für die TPF (403) in dem PLMN (40) ausgestaltet ist; wobei das Verfahren ferner umfasst, dass vor dem Schritt C1 die Heim-CRF (411) des Teilnehmers die ausgewählte Rechnungsstellungsregelung an die Vermittler-CRF (404) sendet, die für die TPF (403) ausgestaltet ist; wobei der Schritt C1 umfasst, dass die Vermittler-CRF (404) der TPF (403) die Rechnungsstellungsregelung bereitstellt.

7. Verfahren nach Anspruch 5, das ferner umfasst, dass die TPF (105, 403) nach dem Schritt C1 die Rechnungsstellungsregelung an dem Dienstdatenfluss des Teilnehmers ausführt.

8. Verfahren nach Anspruch 1 oder 2, das ferner umfasst, dass die CRF (103) nach dem Schritt B eine Rückmeldung an die AF (104) zurückgibt.

## Revendications

1. Procédé de sélection d'une règle de facturation en liaison avec un abonné, comprenant :
une fonction d'application, AF pour « *Application Function* », (104, 401) qui fournit à une fonction de règle de facturation, CRF pour « *Charging Rule Function* », (103),
des informations de service utilisées pour la sélection d'une règle de facturation,
**caractérisé en ce que** le procédé comprend en outre :
A. la fourniture à la fonction CRF (103), par la fonction AF (104, 401), des informations sur l'utilisateur qui identifient l'abonné et qui sont utilisées pour la sélection d'une règle de facturation, lesdites informations sur l'utilisateur comprenant une identification de terminal de l'utilisateur ;
B. la sélection par la fonction CRF (103) d'une règle de facturation pour l'abonné, en fonction des informations sur l'utilisateur et des informations de service.

2. Procédé selon la revendication 1, dans lequel la fonction AF (104, 401) est implantée dans le réseau mobile public terrestre, PLMN, (40) auquel l'abonné accède actuellement, un agent CRF (402) étant configuré pour la fonction AF (104, 401) dans le réseau PLMN (40) ; ladite étape A comprenant les étapes suivantes :
A1. fourniture par la fonction AF (104, 401) à l'agent CRF (402) configuré pour la fonction AF (104, 401), dans le réseau PLMN (40) auquel l'abonné accède actuellement, des informations de service et des informations sur l'utilisateur qui sont utilisées pour sélectionner une règle de facturation ;
A2. acheminement par l'agent CRF (402) des informations de service et des informations sur l'utilisateur qui sont utilisées pour la sélection d'une règle de facturation vers la fonction CRF de rattachement (411) de l'abonné ;
ladite étape B étant : sélection par la fonction CRF de rattachement (411) de l'abonné d'une règle de facturation pour l'abonné en fonction des informations sur l'utilisateur et des informations de service.

3. Procédé selon la revendication 2, comprenant en outre, avant ladite étape A1, consistant à fournir à l'agent CRF (402) configuré pour la fonction AF (104, 401) les informations de service et les informations sur l'utilisateur qui sont utilisées pour la sélection d'une règle de facturation: décider si le réseau PLMN de rattachement (41) est le réseau PLMN (40) auquel l'abonné accède actuellement et, si tel n'est pas le cas, fournir à l'agent CRF (402) configuré pour la fonction AF (104, 401) les informations qui sont utilisées pour la sélection d'une règle de facturation.

4. Procédé selon la revendication 3, dans lequel ladite étape consistant à décider si le réseau PLMN de rattachement (41) est le réseau PLMN (40) auquel l'abonné accède actuellement consiste à décider si le réseau PLMN de rattachement (41) est le réseau PLMN (40) auquel l'abonné accède actuellement en fonction des informations sur l'utilisateur.

5. Procédé selon la revendication 1 ou la revendication 2, comprenant en outre, après ladite étape B, l'étape suivante :
C1. fourniture de la règle de facturation à une fonction de plan de trafic, TPF pour « *Traffic Plane Function* », (105, 403) par la fonction CRF (103, 404).

6. Procédé selon la revendication 5, dans lequel la fonction TPF (105, 403) est implantée dans le réseau PLMN (40) auquel l'abonné accède actuellement, un agent CRF (404) étant configuré pour la fonction TPF (403) dans le réseau PLMN (40) ; le procédé comprenant en outre, avant ladite étape C1:
émission par la fonction CRF de rattachement (411) de l'abonné de la règle de facturation sélectionnée à l'agent CRF (404) configuré pour la fonction TPF (403) ;
ladite étape C1 comprenant : la fourniture par l'agent CRF (404) à la fonction TPF (403) de la règle de facturation.

7. Procédé selon la revendication 5, comprenant en outre, après ladite étape C1:
exécution par la fonction TPF (105, 403) de la règle de facturation sur le flux de données de service de l'abonné.

8. Procédé selon la revendication 1 ou la revendication 2, comprenant en outre, après ladite étape B : renvoi d'un accusé de réception par la fonction C RF (103) à la fonction AF (104).
